# EUROPÄISCHE PATENTSCHRIFT

(11) **EP 4 514 588 B1**
(45) Veröffentlichungstag und Bekanntmachung des Hinweises auf die Patenterteilung: **28.01.2026**
(21) Anmeldenummer: 23722275.7
(22) Anmeldetag: 21.04.2023
(51) Int. Cl.: B29C 49/00, B29C 49/24, B29C 49/06, B29K 75/00, B29L 31/00

(54) **SPENDERBEHÄLTER UND VERFAHREN ZUR HERSTELLUNG EINES SPENDERBEHÄLTERS**
DISPENSER CONTAINER AND METHOD FOR PRODUCING A DISPENSER CONTAINER
RÉCIPIENT DISTRIBUTEUR ET PROCÉDÉ DE PRODUCTION D'UN RÉCIPIENT DISTRIBUTEUR

(30) Priorität: 01.06.2022 DE 102022113840
(43) Veröffentlichungstag der Anmeldung: 05.03.2025
(73) Patentinhaber: INOTECH Kunststofftechnik GmbH, 92507 Nabburg (DE)
(72) Erfinder: GLEIXNER, Josef, 92507 Nabburg (DE)
(74) Vertreter: Glück Kritzenberger Patentanwälte PartGmbB
(86) Internationale Anmeldenummer: PCT/EP2023/060472
(87) Internationale Veröffentlichungsnummer: WO 2023/232346

(56) Entgegenhaltungen:
- EP-A1- 2 489 608
- EP-B1- 2 246 267
- US-A1- 2011 024 380
- US-A1- 2011 227 258
- US-B2- 8 167 171

## Beschreibung

### Technisches Gebiet

Die vorliegende Erfindung betrifft einen Spenderbehälter mit Außenbehälter und Innenbehälter zum Aufnehmen eines Füllgutes sowie ein Verfahren zur Herstellung eines solchen Spenderbehälters.

### Stand der Technik

Spenderbehälter mit einem Außen- und einem Innenbehälter sind aus dem Stand der Technik in verschiedenen Ausführungsformen bekannt. Das Füllgut der Spenderbehälter ist dabei immer in dem jeweiligen Innenbehälter aufgenommen.

Bekannt sind beispielsweise Spenderbehälter, die aus einem elastisch verformbaren Außenbehälter und einem in diesem Außenbehälter angeordneten, plastisch verformbaren Innenbehälter bestehen. Die Formsteifigkeit des Außenbehälters wird dabei so gewählt, dass nach einem Zusammendrücken des Außenbehälters dieser sich wieder in seine ursprüngliche Gestalt zurückverformt. Der Innenbehälter besteht aus einem plastisch verformbaren Material, sodass er sich unter Druckeinwirkung nahezu vollständig zusammenlegt und somit auch gut entleert werden kann. Damit der Außenbehälter seine ästhetisch ansprechende Gestalt beibehält, muss für einen Druckausgleich in dem Raum zwischen Außen- und Innenbehälter gesorgt werden.

In diesem Zusammenhang beschreibt die DE 40 27 539 A1 beispielsweise eine Quetschflasche mit einem im Wesentlichen formsteifen, jedoch elastisch verformbaren Außenbehälter, innerhalb dessen ein leicht verformbarer Innenbehälter angeordnet ist. Ein Verschluss dichtet den zwischen Innen- und Außenbehälter befindlichen Raum ab. Der Verschluss weist eine Dichtlippe auf, durch welche Luft in den Zwischenraum strömen kann, sobald der Auspressvorgang des Tubeninhalts abgeschlossen ist. So wird gewährleistet, dass der Außenbehälter wieder seine ursprüngliche Gestalt annimmt.

Bei einer alternativen Art von Spenderbehälter erfolgt der Spendevorgang nicht durch ein Zusammendrücken des Behälters, sondern durch Erzeugung eines Unterdrucks in dem Behälter mit Hilfe einer Pumpe und eines in das Füllgut reichenden Saugrohrs. Diese Art von Spenderbehälter ermöglicht es, Außenbehälter aus einem formstabilen Material zu verwenden. Es hat sich nämlich gezeigt, dass ein Außenbehälter aus einem formstabilen Material wie insbesondere Glas von vielen Verbrauchern im Vergleich zu einem Außenbehälter aus einem deformierbaren Material als wertiger empfunden wird, so dass sich Produkte, welche in einem solchen Glasbehälter angeboten werden, oft besser verkaufen als die gleichen Produkte in einem deformierbaren Kunststoffbehälter.

Diese Art von Spenderbehältern, wie sie beispielhaft in der DE 10 2019 120 624 A1 beschrieben sind, werden beispielsweise zur dosierten Abgabe von kosmetischen oder medizinischen Produkten, welche als Fluide vorliegen, verwendet.

In der DE 10 2014 113 535 A1 wird ein Spenderbehälter bestehend aus einem Außenbehälter und einem Innenbehälter beschrieben. Außenbehälter und Innenbehälter sind in diesem Fall aus zwei verschiedenen blasgeformten Kunststoffen gebildet, wobei die beiden Kunststoffe keine stoffschlüssige Verbindung miteinander eingehen. Dabei weist der Kunststoff, aus dem der Innenbehälter gebildet ist, eine höhere Elastizität auf als der Kunststoff, aus dem der Außenbehälter gebildet ist, sodass der Innenbehälter durch einen auf ihn einwirkenden Unterdruck verformt wird, während der Außenbehälter formstabil bleibt. Der Außenbehälter weist eine Druckausgleichsöffnung zum Druckausgleich im Bereich zwischen Außenbehälter und Innenbehälter auf.

Die Herstellung des Spenderbehälters der DE 10 2014 113 535 A1 erfolgt durch ein Spritzblasverfahren, wobei zunächst ein Vorformling produziert wird. Zur Bildung des Vorformlings erfolgt in einem ersten Schritt ein Aufspritzen einer ersten Schicht auf einen sich in einer ersten Kavität einer Mehrkomponenten-Spritzgussvorrichtung befindlichen Spritzblaskern. Aus dieser ersten Schicht wird nachfolgend der Innenbehälter des Spenderbehälters geformt. Der Spritzblaskern wird dann mit der sich darauf befindlichen ersten Schicht in eine zweite Kavität eingeführt. Dann wird eine zweite Schicht auf den sich in der zweiten Kavität der Mehrkomponenten-Spritzgussvorrichtung befindlichen Spritzblaskern aufgespritzt. Aus dieser zweiten Schicht wird nachfolgend der Außenbehälter des Spenderbehälters geformt. In einem weiteren Prozessabschnitt wird der Vorformling auf eine zum Streckblasen erforderliche Temperatur gebracht, in eine Streckblaseinrichtung eingebracht und dort zu dem gewünschten Spenderbehälter mit flexiblem Innenbehälter und formstabilem Außenbehälter expandiert.

Schließlich sind aus dem Stand der Technik auch Spenderbehälter bekannt, bei denen ein Kunststoffinnenbehälter aus einem flexiblen Material durch ein Blasverfahren innerhalb eines formstabilen Außenbehälters gebildet wird. Die EP 2 246 267 B1 offenbart beispielsweise einen Spenderbehälter bestehend aus einem äußeren, starren Behälter sowie einem kollabierbaren Beutel, der im Innenraum des Außenbehälters aufgenommen ist. Der kollabierbare Beutel wird als ein aus einem thermoplastischen Kunststoff bestehender Vorformling in den Innenraum des Außenbehälters eingebracht und dort mittels eines Blasverfahrens aufgeblasen. Der dadurch geformte Beutel bildet einen flexiblen, durch Druck komprimierbaren Innenbehälter. Der formstabile Außenbehälter kann aus Glas, Aluminium oder einem entsprechenden Kunststoff bestehen.

Einen ähnlich aufgebauten Spenderbehälter beschreibt die US 2007/0267437 A1. Auch bei diesem Spenderbehälter ist ein Innenbehälter mit veränderlichem Volumen vorgesehen, der in einem Außenbehälter aus einem starren Material wie z.B. Aluminium aufgenommen ist. Der durch ein Streckblasverfahren aus einem Vorformling hergestellte Innenbehälter besteht in seinem Halsabschnitt aus einem harten, temperaturbeständigen Kunststoff wie Nylon 66 und im Beutelbereich aus einem weicheren, flexiblen Kunststoff wie PET.

Bei der Herstellung der in der EP 2 246 267 B1 und der US 2007/0267437 A1 beschriebenen Art von Spenderbehältern tritt das Problem auf, dass bei der Bildung des Innenbehälters durch Expandieren eines Vorformlings innerhalb des starren Außenbehälters die in dem Außenbehälter eingeschlossene Luft häufig nicht vollständig entweichen kann, weil der sich bildende Innenbehälter bereits zu einem Zeitpunkt im oberen Bereich des Außenbehälters, also in dem dem Außenbehälternippel benachbarten Bereich, mit der Wandung des Außenbehälters in Kontakt tritt, zu dem die Luft aus dem unteren Volumen des Außenbehälters, also aus dem dem Außenbehälterboden (16) benachbarten Bereich, noch nicht vollständig aus dem Außenbehälter ausgeströmt ist. Beim Expandieren des Vorformlings gewinnt der Innenbehälter sozusagen von oben nach unten an Volumen, wodurch die Luft im unteren Bereich eingeschlossen wird. Dadurch bildet sich der Innenbehälter nicht mit dem eigentlich gewünschten Volumen aus, was zu Schwierigkeiten bei der Befüllung mit Füllgut und zu einem unerwünschen Totvolumen im Außenbehälter führt. Besonders häufig tritt dieses Problem bei Außenbehältern mit ausgeprägter Außenbehälterschulter auf, wobei in keinem Fall beim Expandieren des Innenbehälters ein vollständiges Entweichen der Luft aus dem unteren Volumen des Außenbehälters erreicht wird.

Document US2011/024380A1 (D1) offenbart ein Verfahren zur Herstellung eines Spenderbehälters umfassend die Schritte:
a) Bereitstellen eines aus einem formstabilen Material gebildeten Außenbehälters, wobei der Außenbehälter einen Außenbehälterboden, einen Außenbehälterkörper und einen eine Außenbehälteröffnung aufweisenden Außenbehälternippel aufweist,
b) Bereitstellen eines Vorformlings, wobei der Vorformling einen becherartigen Formkörper aufweist, wobei der Formkörper aus zumindest zwei Abschnitten aufgebaut ist, wobei ein erster Abschnitt ein geschlossenes Ende des Formkörpers bildet und ein zweiter Abschnitt ein offenes Ende des Formkörpers bildet, wobei das geschlossene Ende dem offenen Ende gegenüberliegt, wobei der erste Abschnitt zur Bildung eines Innenbehälterkörpers vorgesehen ist und der zweite Abschnitt zur Bildung eines eine Ausgabeöffnung aufweisenden Innenbehälterausgabeabschnitts vorgesehen ist, wobei der zweite Abschnitt an seiner äußeren Oberfläche zumindest eine nutartige Vertiefung zur Bildung eines Entlüftungskanals aufweist,
c) Erwärmen des Vorformlings,
d) Einbringen des Vorformlings in den Außenbehälter und Einbringen eines Streckblasdorns in den Vorformling, wobei das Einbringen des Streckblasdorns in den Vorformling vor oder nach dem Einbringen des Vorformlings in den Außenbehälter erfolgt,
e) Streckblasen zur Ausbildung eines Innenbehälters unter Verdrängung der in dem zwischen dem Vorformling und dem Außenbehälter befindlichen Raum enthaltenen Luft, wobei die Luft über den zumindest einen Entlüftungskanal in die Umgebung entweicht.

Weitere Gattungsgemäße Verfahren und Behältern sind in den Patentschriften US2021/316890A1, DE102018003793A1 und US4617780A beschrieben.

Es besteht also Bedarf an Spenderbehältern und Verfahren zu deren Herstellung, bei denen ein flexibler Innenbehälter das Volumen eines formstabilen Außenbehälters möglichst vollständig einnimmt.

### Darstellung der Erfindung

Der Erfindung, wie sie in den Ansprüchen gekennzeichnet ist, liegt die Aufgabe zu Grunde ein Verfahren zur Herstellung eines Spenderbehälters bereitzustellen, das es ermöglicht, einen flexiblen Innenbehälter innerhalb eines formstabilen Außenbehälters anzuordnen, wobei der Innenbehälter das Volumen des Außenbehälters möglichst vollständig einnimmt.

Diese Aufgabe wird erfindungsgemäß durch das Verfahren zur Herstellung eines Spenderbehälters gemäß Anspruch 1 und den Spenderbehälter gemäß Anspruch 5 gelöst. Weitere vorteilhafte Details, Aspekte und Ausgestaltungen der vorliegenden Erfindung ergeben sich aus den abhängigen Ansprüchen, der Beschreibung, den Beispielen und den Zeichnungen.

Das erfindungsgemäße Verfahren zur Herstellung eines Spenderbehälters umfasst die Schritte:
a) Bereitstellen eines aus einem formstabilen Material gebildeten Außenbehälters, wobei der Außenbehälter einen Außenbehälterboden, einen Außenbehälterkörper und einen eine Außenbehälteröffnung aufweisenden Außenbehälternippel aufweist,
b) Bereitstellen eines Vorformlings, wobei der Vorformling einen becherartigen Formkörper aufweist, wobei der Formkörper aus zumindest zwei Abschnitten aufgebaut ist, wobei ein erster Abschnitt ein geschlossenes Ende des Formkörpers bildet und ein zweiter Abschnitt ein offenes Ende des Formkörpers bildet, wobei das geschlossene Ende dem offenen Ende gegenüberliegt, wobei der erste Abschnitt zur Bildung eines Innenbehälterkörpers vorgesehen ist und der zweite Abschnitt zur Bildung eines eine Ausgabeöffnung aufweisenden Innenbehälterausgabeabschnitts vorgesehen ist, wobei der erste Abschnitt aus einem blasformbaren elastischen Kunststoff besteht, wobei der zweite Abschnitt aus einem formstabilen Kunststoff besteht, wobei der zweite Abschnitt an seiner äußeren Oberfläche zumindest eine nutartige Vertiefung zur Bildung eines Entlüftungskanals aufweist,
c) Erwärmen des Vorformlings,
d) Einbringen des Vorformlings in den Außenbehälter und Einbringen eines Streckblasdorns in den Vorformling, wobei das Einbringen des Streckblasdorns in den Vorformling vor oder nach dem Einbringen des Vorformlings in den Außenbehälter erfolgt,
e) Streckblasen zur Ausbildung eines Innenbehälters unter Verdrängung der in dem zwischen dem Vorformling und dem Außenbehälter befindlichen Raum enthaltenen Luft, wobei die Luft über den zumindest einen Entlüftungskanal in die Umgebung entweicht.

Erfindungsgemäß wird zur Bildung des Innenbehälters ein Vorformling eingesetzt, welcher in seinem zur Bildung des Innenbehälterausgabeabschnitts vorgesehenen zweiten Abschnitt an seiner äußeren Oberfläche zumindest eine nutartige Vertiefung aufweist. Dadurch wird die Möglichkeit geschaffen, dass die Luft, welche bei dem Streckblasvorgang zur Bildung des Innenbehälters aus dem zwischen dem Vorformling und dem Außenbehälter befindlichen Raum verdrängt wird, über den durch die nutartige Vertiefung gebildeten Entlüftungskanal in die Umgebung entweicht.

Durch die Kombination der Merkmale des erfindungsgemäßen Verfahrens zur Herstellung eines Spenderbehälters wird sichergestellt, dass unabhängig von der Art des Außenbehälters beim Expandieren des Innenbehälters die Luft aus dem gesamten Volumen des Außenbehälters und insbesondere auch aus dem Bereich des Außenbehälterbodens vollständig entweicht. Dadurch bildet sich der Innenbehälter in gewünschter Weise aus und füllt das Volumen des Außenbehälters im Idealfall praktisch vollständig aus. Auf diese Weise wird das aus dem Stand der Technik hinlänglich bekannte Totvolumen zwischen Innenbehälter und Außenbehälter im Bodenbereich des Außenbehälters vermieden und der Innenbehälter kann problemlos und vollständig mit Füllgut ausgestattet werden.

Nach dem Streckblasen zur Ausbildung des Innenbehälters wird der Spenderbehälter abgekühlt, die Streckblasvorrichtung entnommen und der Spenderbehälter kann unmittelbar mit Füllgut ausgestattet werden.

Bevorzugt wird in Schritt e) das Streckblasen solange durchgeführt, bis eine äußere Oberfläche des Innenbehälterkörpers mit einer inneren Oberfläche des Außenbehälters über zumindest 90%, bevorzugt über zumindest 99%, der Ausdehnung des Außenbehälterbodens in Kontakt steht. Insbesondere bevorzugt steht die äußere Oberfläche des Innenbehälterkörpers mit der inneren Oberfläche des Außenbehälters im Wesentlichen über die gesamte Ausdehnung des Außenbehälterbodens in Kontakt, bevorzugt über die gesamte Ausdehnung des Außenbehälterbodens.

Das Streckblasen erfolgt in diesem Fall zumindest so lange, bis die äußere Oberfläche des Innenbehälterkörpers mit der inneren Oberfläche des Außenbehälters im Wesentlichen über die gesamte Ausdehnung des Außenbehälterbodens in Kontakt steht.

Unter dem Ausdruck "Ausdehnung des Außenbehälterbodens" wird im Rahmen des vorliegenden Textes die jeweilige Fläche des Außenbehälterbodens gemeint. Steht also die äußere Oberfläche des Innenbehälterkörpers mit der inneren Oberfläche des Außenbehälters über zumindest 90% der Ausdehnung des Außenbehälterbodens in Kontakt, so ist gemeint, dass die äußere Oberfläche des Innenbehälterkörpers mit der inneren Oberfläche des Außenbehälters über zumindest 90% der Fläche der inneren Oberfläche des Außenbehälterbodens in Kontakt steht. Gleiches gilt für die Ausdehnung von Außenbehälterkörper und Außenbehälterschulter.

Bevorzugt wird in Schritt e) das Streckblasen solange durchgeführt, bis die äußere Oberfläche des Innenbehälterkörpers mit der inneren Oberfläche des Außenbehälters über zumindest 90% der Ausdehnung des Außenbehälterkörpers in Kontakt steht. Durch diese bevorzugte Ausführungsform wird sichergestellt, dass unabhängig von der Art des Außenbehälters beim Expandieren des Innenbehälters die Luft im Wesentlichen aus dem gesamten Volumen des Außenbehälters und insbesondere aus dem Bereich des Außenbehälterkörpers vollständig entweicht. Dadurch bildet sich der Innenbehälter in gewünschter Weise aus und füllt das Volumen des Außenbehälters praktisch vollständig aus, insbesondere auch im Bereich aller eventuell vorhandenen Ecken des Außenbehälters. Somit wird Totvolumen im Außenbehälter vermieden und der Innenbehälter kann problemlos und vollständig mit Füllgut ausgestattet werden.

Gemäß einer weiteren bevorzugten Ausführungsform der vorliegenden Erfindung wird in Schritt e) das Streckblasen solange durchgeführt, bis die äußere Oberfläche des Innenbehälterkörpers mit der inneren Oberfläche des Außenbehälters über zumindest 99% der Ausdehnung des Außenbehälterkörpers in Kontakt steht. In diesem Fall stehen der Innenbehälter und der Außenbehälter im Wesentlichen über die gesamte Ausdehnung einer inneren Oberfläche des Außenbehälterkörpers miteinander in Kontakt. Durch diese Ausführungsform wird in idealer Weise sichergestellt, dass unabhängig von der Art des Außenbehälters und insbesondere auch im Falle eines Außenbehälters mit ausgeprägter Außenbehälterschulter beim Expandieren des Innenbehälters die Luft aus dem gesamten Volumen des Außenbehälters und insbesondere auch aus dem Bereich des Außenbehälterkörpers vollständig entweicht. Dadurch bildet sich der Innenbehälter in gewünschter Weise aus und füllt das Volumen des Außenbehälters praktisch vollständig aus, insbesondere auch im Bereich aller eventuell vorhandenen Ecken des Außenbehälters. Somit wird Totvolumen im Außenbehälter vermieden und der Innenbehälter kann problemlos und vollständig mit Füllgut ausgestattet werden.

Bevorzugt steht die äußere Oberfläche des Innenbehälterkörpers mit der inneren Oberfläche des Außenbehälters im Wesentlichen über die gesamte Ausdehnung des Außenbehälterbodens in Kontakt und zudem über zumindest 99% der Ausdehnung des Außenbehälterkörpers.

Gemäß einer insbesondere bevorzugten Ausführungsform der vorliegenden Erfindung weist der in Schritt a) bereitgestellte Außenbehälter neben dem Außenbehälterboden, dem Außenbehälterkörper und dem Außenbehälternippel zusätzliche eine Außenbehälterschulter auf. In Schritt e) wird das Streckblasen solange durchgeführt, bis die äußere Oberfläche des Innenbehälterkörpers mit der inneren Oberfläche des Außenbehälters über zumindest 90% der Ausdehnung der Außenbehälterschulter in Kontakt steht.

Gemäß einer weiteren bevorzugten Ausführungsform der vorliegenden Erfindung weist der in Schritt a) bereitgestellte Außenbehälter einen Außenbehälterboden, einen Außenbehälterkörper, einen Außenbehälternippel und eine Außenbehälterschulter auf. Das Streckblasen gemäß Schritt e) wird solange durchgeführt, bis die äußere Oberfläche des Innenbehälterkörpers mit der inneren Oberfläche des Außenbehälters über zumindest 99% der Ausdehnung der Außenbehälterschulter in Kontakt steht. Durch diese Ausführungsform wird in idealer Weise sichergestellt, dass unabhängig von der Art des Außenbehälters und insbesondere auch im Falle eines Außenbehälters mit ausgeprägter Außenbehälterschulter beim Expandieren des Innenbehälters die Luft aus dem gesamten Volumen des Außenbehälters und insbesondere auch aus dem Bereich des Außenbehälterkörpers vollständig entweicht. Dadurch bildet sich der Innenbehälter in gewünschter Weise aus und füllt das Volumen des Außenbehälters praktisch vollständig aus, insbesondere auch im Bereich der Außenbehälterschulter und im Bereich aller anderen, eventuell vorhandenen Ecken des Außenbehälters. Somit wird Totvolumen im Außenbehälter vermieden und der Innenbehälter kann problemlos und vollständig mit Füllgut ausgestattet werden.

Besonders bevorzugt sind Ausführungsformen, bei denen die äußere Oberfläche des Innenbehälterkörpers mit der inneren Oberfläche des Außenbehälters über im Wesentlichen die gesamte Ausdehnung des Außenbehälterbodens, über im Wesentlichen die gesamte Ausdehnung des Außenbehälterkörpers und über zumindest 90%, bevorzugt zumindest 99%, der Ausdehnung der Außenbehälterschulter in Kontakt steht. In diesem Fall stehen der Innenbehälter und der Außenbehälter nicht nur über die gesamte Ausdehnung einer inneren Oberfläche des Außenbehälterbodens und des Außenbehälterkörpers miteinander in Kontakt, sondern zudem über den weit überwiegenden Teil der Ausdehnung der Außenbehälterschulter.

Für den Fachmann ist es selbstverständlich, dass aufgrund der Tatsache, dass ein von dem Raum zwischen dem Vorformling und dem Außenbehälter bis zur Umgebung reichender Entlüftungskanal ausgebildet wird, sich der aus einem formstabilen Kunststoff gebildete Innenbehälterausgabeabschnitt in Richtung der Spenderbehälterlängsachse über die gesamte Ausdehnung des Außenbehälternippels erstreckt. Dadurch wird eine fluide Verbindung zwischen der Umgebung und dem zwischen dem Vorformling und dem Außenbehälter befindlichen Raum ausgebildet.

Für den Fachmann ist es ebenfalls selbstverständlich, dass mit Ausdrücken wie "vollständig entweichende Luft", "über die gesamte Ausdehnung in Kontakt stehen", usw. ein gewisser Grad an Unschärfe verbunden ist. So entweicht die Luft aus dem Raum zwischen Innenbehälter und Außenbehälter nicht "vollständig" im Sinne der Bildung eines Vakuums, sondern lediglich "vollständig" in dem Sinn, dass keine sichtbaren Blasen oder Einschlüsse von Luft zwischen Außen- und Innenbehälter verbleiben. Eine "gesamte Ausdehnung" kann ebenfalls nicht 100% im mathematischen Sinne bedeuten, sondern bezeichnet lediglich die Tatsache, dass keine sichtbaren Bereiche verbleiben, in denen in dem entsprechenden Behälterabschnitt, also z.B. Behälterboden, der Innenbehälter nicht im Kontakt mit dem Außenbehälter steht.

Im Rahmen des vorliegenden Textes werden die Ausdrücke "zwischen dem Innenbehälter und dem Außenbehälter befindlicher Raum" und "zwischen dem Vorformling und dem Außenbehälter befindlicher Raum" synoym gebraucht. Wie erläutert wird zunächst ein Vorformling in den Außenbehälter eingebracht, welcher nachfolgend durch einen Streckblasvorgang zu einem Innenbehälter geformt wird. Abhängig vom Fortschritt des Streckblasvorgangs kann zu einem bestimmten Zeitpunkt immer noch von einem Vorformling gesprochen werden aber auch schon von einem Innenbehälter.

Ein im Rahmen der vorliegenden Erfindung verwendeter Außenbehälter kann unterteilt werden in die Abschnitte Außenbehälterboden, Außenbehälterkörper, Außenbehälternippel und Außenbehälterschulter. Dem Fachmann sind diese Begriffe bekannt. Dem Fachmann ist auch geläufig, dass aufgrund der extrem hohen Vielfalt an geometrischen Ausprägungen von Außenbehältern eine scharfe Abgrenzung der einzelnen Abschnitte schwierig ist. Trotzdem stellt es für den Fachmann kein Problem dar, bei einem beliebig geformten Außenbehälter die einzelnen Abschnitte Außenbehälterboden, Außenbehälterkörper, Außenbehälternippel und Außenbehälterschulter zu bestimmen und gegeneinander abzugrenzen. So ist der Außenbehälterboden in jedem Fall zum Aufstellen des Außenbehälters auf einen Untergrund geeignet. Dies gilt auch dann, wenn bei bestimmungsgemäßer Verwendung des Spenderbehälters ein Aufstellen "auf dem Kopf", also z.B. auf einem an dem Außenbehälter angebrachten Verschlussdeckel vorgesehen ist. Der Außenbehälterkörper begrenzt in horizontaler Richtung den das Füllgut aufnehmenden Teil des Außenbehälters. Dies gilt auch für Spenderbehälter mit einer nicht vertikal zum Untergrund verlaufenden Spenderbehälterlängsachse. Die optionale Außenbehälterschulter verbindet den Außenbehälterkörper mit dem Außenbehälternippel, welcher häufig mit einem Außengewinde ausgestattet ist.

Die vorliegende Erfindung bezieht sich auch auf einen Spenderbehälter aufweisend einen aus einem formstabilen Material gebildeten Außenbehälter und einen innerhalb des Außenbehälters angeordneten Innenbehälter zum Aufnehmen eines Füllgutes, wobei der Außenbehälter einen Außenbehälterboden, einen Außenbehälterkörper und einen eine Außenbehälteröffnung aufweisenden Außenbehälternippel aufweist. Der Innenbehälter umfasst einen im Bereich des Außenbehälterkörpers angeordneten Innenbehälterkörper und einen im Bereich des Außenbehälternippels angeordneten, eine Ausgabeöffnung aufweisenden Innenbehälterausgabeabschnitt, wobei sich der Innenbehälterausgabeabschnitt in Richtung einer Spenderbehälterlängsachse über die gesamte Ausdehnung des Außenbehälternippels erstreckt. Der Innenbehälterkörper ist aus einem blasgeformten elastischen Kunststoff gebildet, während der Innenbehälterausgabeabschnitt aus einem formstabilen Kunststoff gebildet ist. Erfindungsgemäß weist der Innenbehälterausgabeabschnitt an seiner, dem Außenbehälternippel zugewandten Oberfläche zumindest eine nutartige Vertiefung zur Bildung zumindest eines Entlüftungskanals auf, wobei der Entlüftungskanal eine fluide Verbindung zwischen der Umgebung und einem zwischen dem Innenbehälter und dem Außenbehälter befindlichen Raum ausbildet. Die äußere Oberfläche des Innenbehälterkörpers steht mit der inneren Oberfläche des Außenbehälters über zumindest 90% der Ausdehnung des Außenbehälterbodens in Kontakt.

Das aus dem Stand der Technik bekannte Problem, wonach beim Expandieren des Vorformlings der Innenbehälter von oben nach unten an Volumen gewinnt, wodurch die Luft im unteren Bereich eingeschlossen wird, ist durch den erfindungsgemäßen Spenderbehälter überwunden. Der Innenbehälter bildet sich vollständig mit dem gesamten gewünschten Volumen aus, wodurch Schwierigkeiten bei der Befüllung mit Füllgut und ein unerwünsches Totvolumen im Außenbehälter vermieden werden.

Erfindungsgemäß ist der Außenbehälter aus einem formstabilen Material gebildet. Unter "formstabil" wird im Rahmen des vorliegenden Textes verstanden, dass ein aus einem formstabilen Material gebildeter Behälter bei üblichen, bei der Benutzung eines Spenderbehälters auftretenden Drucken sich nicht bzw. nur in zu vernachlässigendem Ausmaß verformt.

Bei dem Füllgut kann es sich um jeden Stoff mit einer für den Spendevorgang ausreichend niedrigen Viskosität handeln. Bevorzugt werden als Füllgut Pasten, Cremes, Gele und Flüssigkeiten verwendet.

Bevorzugt steht die äußere Oberfläche des Innenbehälterkörpers mit der inneren Oberfläche des Außenbehälters über zumindest 99% der Ausdehnung des Außenbehälterbodens in Kontakt. Durch diese bevorzugten Ausführungsformen wird sichergestellt, dass unabhängig von der Art des Außenbehälters der Innenbehälter in gewünschter Weise das Volumen des Außenbehälters praktisch vollständig ausfüllt, insbesondere auch im Bereich aller eventuell vorhandenen Ecken des Außenbehälters.

Somit wird Totvolumen im Außenbehälter vermieden und der Innenbehälter kann problemlos und vollständig mit Füllgut ausgestattet werden.

Insbesondere bevorzugt steht die äußere Oberfläche des Innenbehälterkörpers mit der inneren Oberfläche des Außenbehälters im Wesentlichen über die gesamte Ausdehnung des Außenbehälterbodens in Kontakt, bevorzugt über die gesamte Ausdehnung des Außenbehälterbodens.

Bevorzugt steht die äußere Oberfläche des Innenbehälterkörpers mit der inneren Oberfläche des Außenbehälters über zumindest 90%, besonders bevorzugt über zumindest 99%, der Ausdehnung des Außenbehälterkörpers in Kontakt. Durch diese bevorzugten Ausführungsformen wird sichergestellt, dass unabhängig von der Art des Außenbehälters der Innenbehälter in gewünschter Weise das Volumen des Außenbehälters praktisch vollständig ausfüllt, insbesondere auch im Bereich aller eventuell vorhandenen Ecken des Außenbehälters. Somit wird Totvolumen im Außenbehälter vermieden und der Innenbehälter kann problemlos und vollständig mit Füllgut ausgestattet werden.

Bevorzugt steht die äußere Oberfläche des Innenbehälterkörpers mit der inneren Oberfläche des Außenbehälters im Wesentlichen über die gesamte Ausdehnung des Außenbehälterbodens in Kontakt und zudem über zumindest 99% der Ausdehnung des Außenbehälterkörpers.

Gemäß einer weiteren bevorzugten Ausführungsform der vorliegenden Erfindung weist der Außenbehälter einen Außenbehälterboden, einen Außenbehälterkörper, einen Außenbehälternippel und eine Außenbehälterschulter auf, wobei die äußere Oberfläche des Innenbehälterkörpers mit der inneren Oberfläche des Außenbehälters über zumindest 90%, insbesondere bevorzugt über zumindest 99%, der Ausdehnung der Außenbehälterschulter in Kontakt steht. Durch diese bevorzugten Ausführungsformen wird sichergestellt, dass unabhängig von der Art des Außenbehälters und insbesondere auch im Falle eines Außenbehälters mit ausgeprägter Außenbehälterschulter der Innenbehälter in gewünschter Weise das Volumen des Außenbehälters praktisch vollständig ausfüllt, insbesondere auch im Bereich der Außenbehälterschulter und im Bereich aller anderen, eventuell vorhandenen Ecken des Außenbehälters. Somit wird Totvolumen im Außenbehälter vermieden und der Innenbehälter kann problemlos und vollständig mit Füllgut ausgestattet werden.

Besonders bevorzugt sind Ausführungsformen, bei denen die äußere Oberfläche des Innenbehälterkörpers mit der inneren Oberfläche des Außenbehälters über im Wesentlichen die gesamte Ausdehnung des Außenbehälterbodens, über im Wesentlichen die gesamte Ausdehnung des Außenbehälterkörpers und über zumindest 90%, bevorzugt zumindest 99%, der Ausdehnung der Außenbehälterschulter in Kontakt steht. In diesem Fall stehen der Innenbehälter und der Außenbehälter nicht nur über die gesamte Ausdehnung einer inneren Oberfläche des Außenbehälterbodens und des Außenbehälterkörpers miteinander in Kontakt, sondern zudem über den weit überwiegenden Teil der Ausdehnung der Außenbehälterschulter.

Gemäß einer weiteren bevorzugten Ausführungsform der vorliegenden Erfindung weist der Innenbehälterausgabeabschnitt in einem der Ausgabeöffnung benachbarten Bereich einen umlaufenden Kragenabschnitt auf, wobei der Kragenabschnitt an einem, dem Außenbehälterkörper abgewandten Randbereich des Außenbehälternippels bündig anliegt. Der Kragenabschnitt weist an seiner, an dem dem Außenbehälterkörper abgewandten Randbereich des Außenbehälternippels bündig anliegenden Oberfläche eine um die Ausgabeöffnung umlaufende nutartige Vertiefung zur Bildung einer Entlüftungsnut und zumindest eine, sich von der Ausgabeöffnung weg erstreckende nutartige Vertiefung zur Bildung zumindest einer Entlüftungsaussparung auf. Die zumindest eine nutartige Vertiefung zur Bildung zumindest eines Entlüftungskanals steht in fluider Verbindung mit der nutartigen Vertiefung zur Bildung einer Entlüftungsnut und die nutartige Vertiefung zur Bildung der Entlüftungsnut steht in fluider Verbindung mit der nutartige Vertiefung zur Bildung der Entlüftungsaussparung, wobei der Entlüftungskanal, die Entlüftungsnut und die Entlüftungsaussparung eine fluide Verbindung zwischen der Umgebung und einem zwischen dem Innenbehälter und dem Außenbehälter befindlichen Raum ausbilden.

Gemäß einer bevorzugten Ausführungsform der vorliegenden Erfindung verläuft die in dem Kragenabschnitt vorgesehene, um die Ausgabeöffnung umlaufende nutartige Vertiefung zur Bildung einer Entlüftungsnut konzentrisch zur Ausgabeöffnung. Diese Art von Entlüftungsnut kann besonders einfach hergestellt werden und stellt eine zusätzlich verbesserte Entlüftung des Volumens zwischen Außenbehälter und Innenbehälter während des Expandierens des Innenbehälters sicher. Der Außenbehälternippel eines Spenderbehälters weist üblicherweise eine zylindrische Form auf, da in der Regel ein Verschluss oder ein Pumpkopf aufgeschraubt wird.

Besondere Vorteile ergeben sich, wenn der Innenbehälterausgabeabschnitt an seiner, dem Außenbehälternippel zugewandten Oberfläche mehrere nutartige Vertiefungen zur Bildung mehrerer Entlüftungskanäle aufweist. Die Entlüftungskänale können in diesem Fall beliebig über den gesamten Umfang des Innenbehälterausgabeabschnitts angeordnet werden. Die Entlüftungskänale stehen alle in fluider Verbindung mit der umlaufenden Entlüftungsnut, wodurch die aus dem Außenbehälter verdrängte Luft über den gesamten Umfang des Innenbehälterausgabeabschnitts austreten kann. Die verdrängte Luft wird in die Entlüftungsnut geleitet und über die Entlüftungsaussparung an die Umgebung abgegeben. Die Anordnung der Entlüftungskanäle kann an eventuelle geometrische Besonderheiten des Außenbehälters angepasst werden. Ist dieser asymmetrisch ausgebildet und weist er einen Bereich auf, von dem zu erwarten ist, dass die Entlüftung des Volumens zwischen Außenbehälter und Innenbehälter besonders gehemmt erfolgen wird, so können in dem entsprechenden Bereich des Innenbehälterausgabeabschnitts besonders viele Entlüftungskanäle vorgesehen werden.

Bevorzugt verlaufen die nutartigen Vertiefungen zur Bildung der Entlüftungskanäle parallel zueinander und besonders bevorzugt parallel zur Spenderbehälterlängsachse. Gemäß dieser Ausführungsform erfolgt die Entlüftung auf direktem Weg und ist daher besonders effektiv.

Bevorzugt sind die nutartigen Vertiefungen zur Bildung der Entlüftungskanäle gleichverteilt über den Umfang des Innenbehälterausgabeabschnitts vorgesehen. Da die Außenbehälter häufig symmetrisch aufgebaut sind, sollte vorteilhafterweise eine über den gesamten Umfang gleichmäßig effektive Entlüftung während des Streckblasvorgangs erfolgen.

Gemäß einer weiteren besonders bevorzugten Ausführungsform weist der Kragenabschnitt mehrere, sich von der Ausgabeöffnung weg erstreckende nutartige Vertiefungen zur Bildung mehrerer Entlüftungsaussparungen auf. In diesem Fall können die Entlüftungsaussparungen beliebig über den gesamten Umfang des Innenbehälterausgabeabschnitts angeordnet werden. Die Entlüftungsaussparungen stehen alle in fluider Verbindung mit der umlaufenden Entlüftungsnut, wodurch die aus dem Außenbehälter verdrängte Luft über den gesamten Umfang des Innenbehälterausgabeabschnitts austreten kann. Die verdrängte Luft wird in die Entlüftungsnut geleitet und über die Entlüftungsaussparungen an die Umgebung abgegeben. Die Anordnung der Entlüftungsaussparungen kann an eventuelle geometrische Besonderheiten des Außenbehälters angepasst werden. Ist dieser asymmetrisch ausgebildet und weist er einen Bereich auf, von dem zu erwarten ist, dass die Entlüftung des Volumens zwischen Außenbehälter und Innenbehälter besonders gehemmt erfolgen wird, so können in dem entsprechenden Bereich des Innenbehälterausgabeabschnitts besonders viele Entlüftungsaussparungen vorgesehen werden.

Bevorzugt sind die nutartigen Vertiefungen zur Bildung der Entlüftungsaussparungen gleichverteilt über den Umfang des Innenbehälterausgabeabschnitts vorgesehen. Da die Außenbehälter häufig symmetrisch aufgebaut sind, sollte vorteilhafterweise eine über den gesamten Umfang gleichmäßig effektive Entlüftung während des Streckblasvorgangs erfolgen.

Besondere Vorteile im Hinblick auf eine effektive Entlüftung während des Streckblasvorgangs ergeben sich, wenn mehrere nutartige Vertiefungen zur Bildung mehrerer Entlüftungskanäle mit mehreren nutartigen Vertiefungen zur Bildung von Entlüftungsaussparungen kombiniert werden. Dabei ist zwar grundsätzlich die Anzahl von Entlüftungskanälen unabhängig von der Anzahl an Entlüftungsaussparungen, allerdings ergibt sich ein besonders gleichmäßiger und ungehemmter Luftstrom während des Streckblasvorgangs dann, wenn die Anzahl an Entlüftungskanälen mit der Annzahl an Entlüftungsaussparungen übereinstimmt und diese über den Umfang des Innenbehälterausgabeabschnitts in identischer Weise verteilt sind. In diesem Fall kann die abströmende Luft direkt von einem Entlüftungskanal über die Entlüftungsnut in die entsprechende Entlüftungsaussparung fließen.

Bevorzugt ist der Außenbehälternippel mit einem Außengewinde ausgestattet. Auf das Außengewinde kann eine beliebig ausgebildete Pumpvorrichtung zur Entnahme des in dem Innenbehälter vorhandenen Füllgutes aufgeschraubt werden. Es kann aber auch lediglich ein Verschlussdeckel vorgesehen werden, welcher die an dem dem Außenbehälterkörper abgewandten Ende des Außenbehälternippels vorgesehene Außenbehälteröffnung verschließt.

Die Ausgestaltung der fluiden Verbindung zwischen der Umgebung und dem zwischen dem Vorformling und dem Außenbehälter befindlichen Raum durch
- zumindest eine nutartige Vertiefung zur Bildung zumindest eines Entlüftungskanals an der dem Außenbehälternippel zugewandten Oberfläche des Innenbehälterausgabeabschnitts,
- eine um die Ausgabeöffnung umlaufende nutartige Vertiefung zur Bildung einer Entlüftungsnut an der, an dem dem Außenbehälterkörper abgewandten Randbereich des Außenbehälternippels bündig anliegenden Oberfläche des Kragenabschnitts sowie
- eine sich von der Ausgabeöffnung weg erstreckende nutartige Vertiefung zur Bildung zumindest einer Entlüftungsaussparung an der, an dem dem Außenbehälterkörper abgewandten Randbereich des Außenbehälternippels bündig anliegenden Oberfläche des Kragenabschnitts
hat sich als ideal zum Ableiten der in dem Raum zwischen dem Vorformling und dem Außenbehälter befindlichen Luft während des Streckblasvorgangs herausgestellt. Durch die um die Ausgabeöffnung umlaufende Entlüftungsnut wird erreicht, dass sowohl Entlüftungskanal wie auch Entlüftungsaussparung am gesamten Umfang des Innenbehälterausgabeabschnitts beliebig positioniert und auch relativ zueinander beliebig angeordnet werden können. Die umlaufende Entlüftungsnut stellt in jedem Fall eine fluide Verbindung zwischen Entlüftungskanal und Entlüftungsaussparung sicher. Die Entlüftungsaussparung und der Entlüftungskanal stehen dabei in fluider Verbindung mit der umlaufenden Entlüftungsnut und die fluide Verbindung des zwischen dem Innenbehälter und dem Außenbehälter befindlichen Raumes zur Außenatmosphäre ist über den Entlüftungskanal, die Entlüftungsnut und die Entlüftungsaussparung gebildet.

Besonders bevorzugt handelt es sich bei dem formstabilen Material des Außenbehälters um Glas, Kunststoff, Metall, eine Metalllegierung oder einen Verbundwerkstoff. Unter "formstabil" wird im Sinne der vorliegenden Erfindung verstanden, dass ein entsprechender Außenbehälter bzw. ein entsprechender Kunststoff sich bei den bei der Benutzung des Spenderbehälters auftretenden Drucken und/oder Unterdrucken nicht oder nur in einem vernachlässigbar kleinen Maß verformt.

Bevorzugt handelt es sich bei dem blasgeformten elastischen Kunststoff des Innenbehälterkörpers um einen thermoplastischen Kunststoff, insbesondere um ein Polyamid, ein Polyolefin oder ein Polycarbonat. Insbesondere bevorzugt werden Polyethylenterephthalat, Polyvinylchlorid, Polyethylen oder Polypropylen verwendet. Die genannten Materialien weisen besonders vorteilhafte Eigenschaften hinsichtlich Schmelztemperatur und Viskosität auf und sind besonders gut für Blasverfahren geeignet.

Insbesondere bevorzugt weisen der blasgeformte elastische Kunststoff des Innenbehälterkörpers des Innenbehälters und der formstabile Kunststoff des Innenbehälterausgabeabschnitts unterschiedliche Viskositäten und/oder Schmelztemperaturen auf. Dadurch kann ein breites Spektrum an Kunststoffen miteinander kombiniert werden. Der Kunststoff des Innenbehälterkörpers kann an die Anforderungen des darin aufbewahrten Füllgutes angepasst werden.

Gemäß einer weiteren besonders bevorzugten Ausführungsform der vorliegenden Erfindung weist der formstabile Kunststoff des Innenbehälterausgabeabschnitts eine höhere Schmelztemperatur auf als der blasgeformte elastische Kunststoff des Innenbehälterkörpers. Damit werden die für das Expandieren des Vorformlings unter Ausbildung des Innenbehälters gewünschten Eigenschaften besonders gut erfüllt. Es kann eine Temperatur eingestellt werden, bei der der elastische Kunststoff des Innenbehälterkörpers bereits schmilzt und eine niedrige Viskosität aufweist, während der formstabile Kunststoff des Innenbehälterausgabeabschnitts unverändert formstabil vorliegt. Das Expandieren des Vorformlings unter Ausbildung des Innenbehälterkörpers kann dann problemlos erfolgen.

Die vorliegende Erfindung umfasst auch einen Spenderbehälter wie oben beschrieben, welcher durch eines der oben beschriebenen Verfahren hergestellt wurde.

Der in einem erfindungsgemäßen Verfahren eingesetzte Vorformling weist einen becherartigen Formkörper auf und besteht aus zumindest zwei Abschnitten, wobei ein erster Abschnitt ein geschlossenes Ende des Formkörpers bildet und ein zweiter Abschnitt ein offenes Ende des Formkörpers bildet, wobei das geschlossene Ende dem offenen Ende gegenüberliegt. Der erste Abschnitt des Vorformlings ist zur Bildung eines Innenbehälterkörpers vorgesehen und der zweite Abschnitt des Vorformlings ist zur Bildung eines eine Ausgabeöffnung aufweisenden Innenbehälterausgabeabschnitts vorgesehen. Der erste Abschnitt besteht aus einem blasformbaren elastischen Kunststoff und der zweite Abschnitt besteht aus einem formstabilen Kunststoff.

Der zweite Abschnitt weist in seinem dem offenen Ende des becherartigen Formkörpers benachbarten Bereich einen umlaufenden Kragenabschnitt auf. An seiner äußeren Oberfläche weist der zweite Abschnitt zumindest eine nutartige Vertiefung zur Bildung zumindest eines Entlüftungskanals auf. An seiner, dem ersten Abschnitt zugewandten Oberfläche weist der Kragenabschnitt eine um die Ausgabeöffnung umlaufende nutartige Vertiefung zur Bildung einer Entlüftungsnut und zumindest eine sich von der Ausgabeöffnung weg erstreckende nutartige Vertiefung zur Bildung zumindest einer Entlüftungsaussparung auf. Die zumindest eine nutartige Vertiefung zur Bildung zumindest eines Entlüftungskanals steht in fluider Verbindung mit der nutartigen Vertiefung zur Bildung einer Entlüftungsnut. Die nutartige Vertiefung zur Bildung der Entlüftungsnut wiederum steht in fluider Verbindung mit der Entlüftungsaussparung.

Der Vorformling dient zur Herstellung eines Innenbehälters für einen der oben beschriebenen Spenderbehälter. Der Vorformling weist alle Merkmale auf, die erforderlich sind, die entsprechende Merkmalskombination des aus Außenbehälter und Innenbehälter bestehenden Spenderbehälters zu erhalten. Das Expandieren des Vorformlings innerhalb eines formstabilen Außenbehälters führt zu dem erfindungsgemäßen Spenderbehälter. Alle oben im Zusammenhang mit dem Spenderbehälter und den einen solchen Spenderbehälter bildenden Komponenten Außenbehälter und Innenbehälter diskutierten Vorteile ergeben sich auch im Zusammenhang mit dem erfindungsgemäßen Vorformling. Entsprechendes gilt auch für die nachfolgend angegebenen bevorzugten Ausführungsformen des Vorformlings.

Bevorzugt handelt es sich bei dem blasformbaren elastischen Kunststoff des ersten Abschnitts des Vorformlings um einen thermoplastischen Kunststoff, insbesondere ein Polyamid, ein Polyolefin oder ein Polycarbonat. Insbesondere bevorzugt sind Polyethylenterephthalat, Polyvinylchlorid, Polyethylen und Polypropylen.

Gemäß einer besonders bevorzugten Ausführungsform weist der formstabile Kunststoff des zweiten Abschnitts des Vorformlings eine höhere Schmelztemperatur auf als der blasformbare elastische Kunststoff des ersten Abschnitts.

Gemäß einer weiteren, besonders bevorzugten Ausführungsform weist der zweite Abschnitt des Vorformlings an seiner äußeren Oberfläche mehrere nutartige Vertiefungen zur Bildung mehrerer Entlüftungskanäle auf. Besonders bevorzugt verlaufen diese mehreren nutartigen Vertiefungen zur Bildung der mehreren Entlüftungskanäle parallel zueinander und insbesondere bevorzugt sind diese mehreren nutartigen Vertiefungen gleichverteilt über den Umfang des zweite Abschnitts vorgesehen. Die mit diesen Ausführungsformen verbundenen Vorteile wurden bereits im Zusammenhang mit den entsprechenden Ausführungsformen des Spenderbehälters diskutiert.

Besonders bevorzugt ist die an der dem ersten Abschnitt zugewandten Oberfläche des Kragenabschnitts vorgesehene, um die Ausgabeöffnung umlaufende nutartige Vertiefung zur Bildung einer Entlüftungsnut konzentrisch zu der Ausgabeöffnung ausgebildet.

Gemäß einer weiteren bevorzugten Ausführungsform weist der Kragenabschnitt an seiner, dem ersten Abschnitt zugewandten Oberfläche mehrere, sich von der Ausgabeöffnung weg erstreckende nutartige Vertiefungen zur Bildung mehrerer Entlüftungsaussparungen auf. Besonders bevorzugt sind diese nutartigen Vertiefungen zur Bildung der Entlüftungsaussparungen gleichverteilt über den Umfang des Innenbehälterausgabeabschnitts vorgesehen. Auch in diesem Fall wurden die Vorteile der bevorzugten Ausführungsformen bereits im Zusammenhang mit den entsprechenden Ausführungsformen des Spenderbehälters diskutiert.

### Kurze Beschreibung der Zeichnungen

Die Erfindung soll nachfolgend anhand von Ausführungsbeispielen im Zusammenhang mit den Zeichnungen näher erläutert werden. Es wird ausdrücklich darauf hingewiesen, dass die Erfindung nicht auf die angegebenen Beispiele beschränkt sein soll. Es zeigen
- Fig. 1: einen erfindungsgemäßen Spenderbehälter im vertikalen Schnitt;
- Fig. 2A: einen erfindungsgemäßen Vorformling in seitlicher Ansicht;
- Fig. 2B: den Vorformling der Fig. 2A in perspektivischer Ansicht von schräg unten;
- Fig. 3A: einen Außenbehälter mit Vorformling und Streckblasdorn vor dem Blasvorgang;
- Fig. 3B: einen Außenbehälter mit Innenbehälter und Streckblasdorn während des Blasvorgangs.

### Wege zur Ausführung der Erfindung

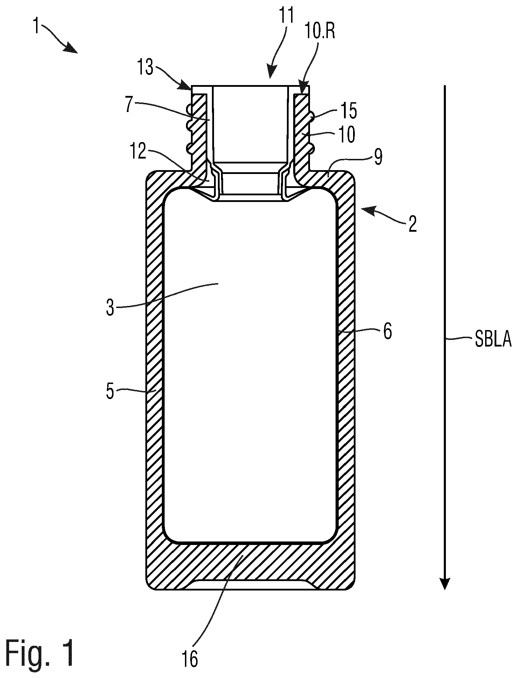

Die Figur 1 zeigt einen erfindungsgemäßen Spenderbehälter 1 im vertikalen Schnitt. Der Spenderbehälter 1 umfasst einen Außenbehälter 2 und einen innerhalb des Außenbehälters 2 angeordneten Innenbehälter 3. In dem Innbehälter 3 kann ein Füllgut aufgenommen sein.

In dem gezeigten Ausführungsbeispiel ist der Außenbehälter 2 aus einem Außenbehälterboden 16, einem Außenbehälterkörper 5, einer Außenbehälterschulter 9 und einem Außenbehälternippel 10 aufgebaut. Der Außenbehälternippel 10 ist an seiner Außenseite mit einem Außengewinde 15 ausgestattet. Auf das Außengewinde 15 kann eine beliebig ausgebildete Pumpvorrichtung zur Entnahme des Füllgutes aufgeschraubt werden. Es kann aber auch lediglich ein Verschlussdeckel aufgeschraubt werden, welcher die am oberen, also dem Außenbehälterkörper 5 abgewandten Ende des Außenbehälternippels 10 vorgesehene Außenbehälteröffnung verschließt.

Der Außenbehälter 2 ist aus einem formstabilen Material gebildet. In dem gezeigten Ausführungsbeispiel besteht der Außenbehälter 2 aus Glas.

Der Innenbehälter 3 weist einen im Bereich des Außenbehälterkörpers 5 angeordneten Innenbehälterkörper 6 und einen im Bereich des Außenbehälternippels 10 angeordneten, eine Ausgabeöffnung 11 aufweisenden Innenbehälterausgabeabschnitt 7 auf. Der Innenbehälterausgabeabschnitt 7 erstreckt sich in Richtung einer Spenderbehälterlängsachse SBLA über die gesamte Ausdehnung des Außenbehälternippels 10 bis in den Bereich der Außenbehälterschulter 9.

Der Innenbehälterkörper 6 ist aus einem blasgeformten elastischen Kunststoff gebildet und der Innenbehälterausgabeabschnitt 7 ist aus einem formstabilen Kunststoff gebildet. In dem in Figur 1 dargestellten Ausführungsbeispiel besteht der Innenbehälterkörper 6 aus Polyethylen und der Innenbehälterausgabeabschnitt 7 aus einem vernetzten Polyurethan.

Wie aus der Figur 1 hervorgeht, wurde das Streckblasen zur Ausbildung des Innenbehälters so lange durchgeführt, bis die äußere Oberfläche des Innenbehälterkörpers 6 mit der inneren Oberfläche des Außenbehälters 2 über die gesamte Ausdehnung des Außenbehälterbodens 15, die gesamte Ausdehnung des Außenbehälterkörpers 5 und über mehr als 90% der Ausdehnung der Außenbehälterschulter 9 in Kontakt steht. Der Innenbehälter und der Außenbehälter stehen also nicht nur über die gesamte Ausdehnung der inneren Oberfläche des Außenbehälterbodens 16 und über die gesamte Ausdehnung der inneren Oberfläche des Außenbehälterkörpers 5 miteinander in Kontakt, sondern zudem über den weit überwiegenden Teil der Ausdehnung der Außenbehälterschulter 9.

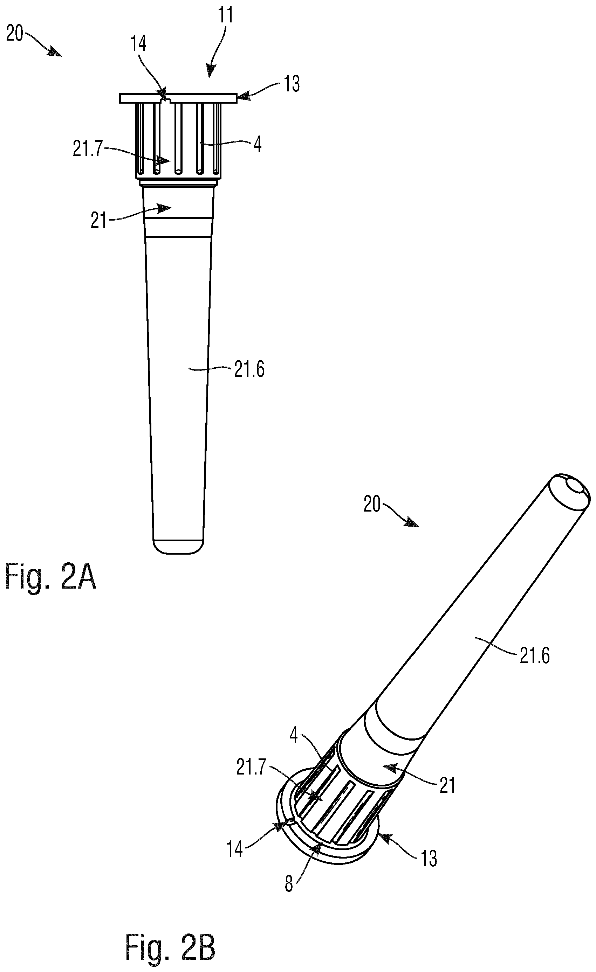

Weitere Merkmale und Eigenschaften des Innenbehälterausgabeabschnitts 7 sind in den Figuren 2A und 2B verdeutlicht, welche einen Vorformling 20 in Seitenansicht (Fig. 2A) bzw. perspektivisch von schräg unten (Fig. 2B) zeigen. Ein solcher Vorformling wird zur Herstellung eines Innenbehälters 3 für einen Spenderbehälter 1, wie er in der Figur 1 gezeigt ist, eingesetzt. Der Vorformling 20 weist einen becherartigen Formkörper 21 auf und ist aus zwei Abschnitten 21.6, 21.7 aufgebaut. Der erste Abschnitt 21.6 bildet das geschlossene Ende des Formkörpers 21 während der zweite Abschnitt 21.7 das offene Ende des Formkörpers 21 bildet, wobei das geschlossene Ende dem offenen Ende gegenüberliegt.

Der erste Abschnitt 21.6 ist zur Bildung des Innenbehälterkörpers 6 und der zweite Abschnitt 21.7 ist zur Bildung des Innenbehälterausgabeabschnitts 7 vorgesehen. Der erste Abschnitt 21.6 besteht aus einem blasformbaren elastischen Kunststoff, im vorliegenden Fall aus Polyethylen, während der zweite Abschnitt 21.7 aus einem formstabilen Kunststoff besteht, im vorliegenden Fall aus einem vernetzten Polyurethan.

In den Figuren 2A und 2B ist die am oberen Ende, also an dem dem ersten Abschnitt 21.6 abgewandten Ende des Innenbehälterausgabeabschnitts 7 (siehe Fig. 1) vorgesehene Ausgabeöffnung mit dem Bezugszeichen 11 kenntlich gemacht. Der zur Bildung des Innenbehälterausgabeabschnitts 7 vorgesehene zweite Abschnitt 21.7 weist an seiner äußeren Oberfläche mehrere nutartige Vertiefungen zur Bildung einer entsprechenden Anzahl an Entlüftungskanälen 4 auf. Die nutartige Vertiefungen verlaufen parallel zueinander und parallel zur Spenderbehälterlängsachse SBLA (siehe Fig. 1). Das gezeigte Ausführungsbeispiel weist insgesamt zehn nutartige Vertiefungen zur Bildung einer entsprechenden Anzahl an Entlüftungskanälen 4 auf.

In den Figuren 2A und 2B ist auch der in einem der Ausgabeöffnung 11 benachbarten Bereich des Innenbehälterausgabeabschnitts 7 vorgesehene umlaufende Kragenabschnitt 13 deutlich zu erkennen. In dem Kragenabschnitt 13 ist eine nutartige Vertiefung zur nachfolgenden Bildung einer Entlüftungsaussparung 14 vorgesehen.

In der perspektivischen Darstellung der Fig. 2B ist die in der zur bündigen Anlage an den dem Außenbehälterkörper 5 abgewandten Randbereich des Außenbehälternippels 10 vorgesehenen Oberfläche des Kragenabschnitts 13 vorhandene, konzentrisch um die Ausgabeöffnung 11 umlaufende nutartige Vertiefung zur Bildung einer Entlüftungsnut 8 zu sehen.

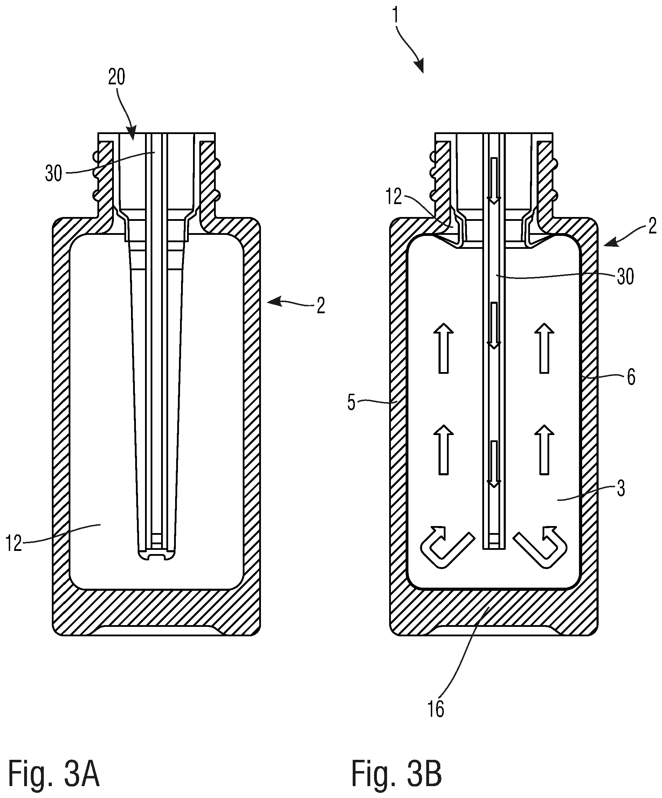

Die nutartige Vertiefung zur Bildung der Entlüftungsaussparung 14 und die nutartigen Vertiefungen zur Bildung der Entlüftungskanäle 4 stehen dabei in fluider Verbindung mit der umlaufenden nutartigen Vertiefung zur Bildung einer Entlüftungsnut 8. Diese Vertiefungen bilden nach dem Einbringen des Vorformlings 20 in den Außenbehälter 2 entsprechend den Entlüftungskanal, die Entlüftungsnut und die Entlüftungsaussparung, wodurch eine fluide Verbindung des zwischen dem Vorformling 20 und dem Außenbehälter 2 befindlichen Raumes 12 (siehe Fig. 3A) zur Außenatmosphäre gebildet wird.

In dem Spenderbehälter 1 der Figur 1 sind die Entlüftungskanäle an der dem Außenbehälternippel 10 zugewandten Oberfläche des Innenbehälterausgabeabschnitts 7 angeordnet. Das Kragenelement 13 liegt an einem, der Außenbehälterschulter 9 abgewandten Randbereich 10.R des Außenbehälternippels 10 bündig an. Die in dem Kragenelement 13 vorgesehene Entlüftungsaussparung steht in fluider Verbindung mit der umlaufenden Entlüftungsnut und den Entlüftungskanälen und stellt auf diese Weise eine die fluide Verbindung des zwischen dem Innenbehälter 3 und dem Außenbehälter 2 befindlichen Raumes 12 zur Außenatmosphäre her. Die Entlüftungsaussparung, die Entlüftungsnut und die Entlüftungskanäle sind in der Schnittdarstellung der Fig. 1 nicht zu sehen.

Anhand der Figuren 3A und 3B soll nachfolgend das erfindungsgemäße Verfahren zur Herstellung eines Spenderbehälters 1, wie er in Figur 1 dargestellt ist, erläutert werden. Zunächst wird ein Außenbehälter 2 bereitgestellt (siehe Figur 3A), der dem im Zusammenhang mit der Figur 1 erläuterten Außenbehälter 2 entspricht. Daneben wird ein Vorformling 20 bereitgestellt, dessen Eigenschaften und Merkmale im Zusammenhang mit den Figuren 2A und 2B bereits diskutiert wurden. Der Vorformling 20 wird auf eine für einen Streckblasvorgang ausreichende Temperatur erwärmt, in den Außenbehälter 2 eingebracht und ein Streckblasdorn 30 wird in den Vorformling 20 eingebracht, womit die in Figur 3A dargestellte Konfiguration erhalten wird. Dabei kann das Einbringen des Streckblasdorns 30 in den Vorformling 20 auch vor dem Einbringen des Vorformlings 20 in den Außenbehälter 2 erfolgen.

Nachfolgend wird ein Streckblasvorgang durchgeführt, wobei die Strömung des eingebrachten Gases in der Figur 3B durch mehrere Pfeile symbolisiert ist. Durch den Streckblasvorgang wird der Innenbehälter 3 ausgebildet. Dabei wird die in dem zwischen dem Vorformling 20 und dem Außenbehälter 2 befindlichen Raum 12 (Figur 3A) enthaltene Luft verdrängt, welche durch die Entlüftungskanäle, die Entlüftungsnut und die Entlüftungsaussparung in die Umgebung entweicht. Das Streckblasen zur Ausbildung des Innenbehälters wird so lange durchgeführt, bis die äußere Oberfläche des Innenbehälterkörpers 6 mit der inneren Oberfläche des Außenbehälters 2 über die gesamte Ausdehnung des Außenbehälterbodens 15, die gesamte Ausdehnung des Außenbehälterkörpers 5 und über mehr als 90% der Ausdehnung der Außenbehälterschulter 9 in Kontakt steht. Dadurch bildet sich der Innenbehälter 3 in gewünschter Weise aus und füllt das Volumen des Außenbehälters 2 praktisch vollständig aus (siehe Figur 3B), insbesondere auch im Bereich der Außenbehälterschulter 9.

### Bezugszeichenliste

- 1: Spenderbehälter
- 2: Außenbehälter
- 3: Innenbehälter
- 4: nutartige Vertiefung zur Bildung eines Entlüftungskanals
- 5: Außenbehälterkörper
- 6: Innenbehälterkörper
- 7: Innenbehälterausgabeabschnitt
- 8: nutartige Vertiefung zur Bildung einer Entlüftungsnut
- 9: Außenbehälterschulter
- 10: Außenbehälternippel
- 10.R: Randbereich des Außenbehälternippels
- 11: Ausgabeöffnung
- 12: Raum zwischen Vorformling und Außenbehälter
- 13: Kragenabschnitt
- 14: nutartige Vertiefung zur Bildung einer Entlüftungsaussparung
- 15: Außengewinde
- 16: Außenbehälterboden
- 20: Vorformling
- 21: Formkörper
- 21.6: erster Abschnitt des Formkörpers
- 21.7: zweiter Abschnitt des Formkörpers
- 30: Streckblasdorn

- SBLA: Spenderbehälterlängsachse

## Patentansprüche

1. Verfahren zur Herstellung eines Spenderbehälters (1) umfassend die Schritte:
a) Bereitstellen eines aus einem formstabilen Material gebildeten Außenbehälters (2), wobei der Außenbehälter (2) einen Außenbehälterboden (16), einen Außenbehälterkörper (5) und einen eine Außenbehälteröffnung aufweisenden Außenbehälternippel (10) aufweist,
b) Bereitstellen eines Vorformlings (20), wobei der Vorformling (20) einen becherartigen Formkörper (21) aufweist, wobei der Formkörper (21) aus zumindest zwei Abschnitten (21.6, 21.7) aufgebaut ist, wobei ein erster Abschnitt (21.6) ein geschlossenes Ende des Formkörpers (21) bildet und ein zweiter Abschnitt (21.7) ein offenes Ende des Formkörpers (21) bildet, wobei das geschlossene Ende dem offenen Ende gegenüberliegt, wobei der erste Abschnitt (21.6) zur Bildung eines Innenbehälterkörpers (6) vorgesehen ist und der zweite Abschnitt (21.7) zur Bildung eines eine Ausgabeöffnung (11) aufweisenden Innenbehälterausgabeabschnitts (7) vorgesehen ist, wobei der erste Abschnitt (21.6) aus einem blasformbaren elastischen Kunststoff besteht, wobei der zweite Abschnitt (21.7) aus einem formstabilen Kunststoff besteht, wobei der zweite Abschnitt (21.7) an seiner äußeren Oberfläche zumindest eine nutartige Vertiefung zur Bildung eines Entlüftungskanals (4) aufweist,
c) Erwärmen des Vorformlings (20),
d) Einbringen des Vorformlings (20) in den Außenbehälter (2) und Einbringen eines Streckblasdorns (30) in den Vorformling (20), wobei das Einbringen des Streckblasdorns (30) in den Vorformling (20) vor oder nach dem Einbringen des Vorformlings (20) in den Außenbehälter (2) erfolgt,
e) Streckblasen zur Ausbildung eines Innenbehälters (3) unter Verdrängung der in dem zwischen dem Vorformling (20) und dem Außenbehälter (2) befindlichen Raum (12) enthaltenen Luft, wobei die Luft über den zumindest einen Entlüftungskanal in die Umgebung entweicht.

2. Verfahren zur Herstellung eines Spenderbehälters (1) nach Anspruch 1, **dadurch gekennzeichnet, dass** in Schritt e) das Streckblasen solange durchgeführt wird, bis die äußere Oberfläche des Innenbehälterkörpers (6) mit der inneren Oberfläche des Außenbehälters (2) über zumindest 90%, bevorzugt über zumindest 99%, der Ausdehnung des Außenbehälterbodens (16) in Kontakt steht.

3. Verfahren zur Herstellung eines Spenderbehälters (1) nach Anspruch 1 oder 2, **dadurch gekennzeichnet, dass** in Schritt e) das Streckblasen solange durchgeführt wird, bis die äußere Oberfläche des Innenbehälterkörpers (6) mit der inneren Oberfläche des Außenbehälters (2) über zumindest 90%, bevorzugt über zumindest 99%, der Ausdehnung des Außenbehälterkörpers (5) in Kontakt steht.

4. Verfahren zur Herstellung eines Spenderbehälters (1) nach einem der Ansprüche 1 bis 3, **dadurch gekennzeichnet, dass** der in Schritt a) bereitgestellte Außenbehälter (2) einen Außenbehälterboden (16), einen Außenbehälterkörper (5), einen Außenbehälternippel (10) und eine Außenbehälterschulter (9) aufweist, wobei in Schritt e) das Streckblasen solange durchgeführt wird, bis die äußere Oberfläche des Innenbehälterkörpers (6) mit der inneren Oberfläche des Außenbehälters (2) über zumindest 90%, bevorzugt über zumindest 99%, der Ausdehnung der Außenbehälterschulter (9) in Kontakt steht.

5. Spenderbehälter (1) aufweisend einen Außenbehälter (2) und einen innerhalb des Außenbehälters (2) angeordneten Innenbehälter (3) zum Aufnehmen eines Füllgutes, wobei der Außenbehälter (2) einen Außenbehälterboden (16), einen Außenbehälterkörper (5) und einen eine Außenbehälteröffnung aufweisenden Außenbehälternippel (10) aufweist,
wobei der Außenbehälter (2) aus einem formstabilen Material gebildet ist,
wobei der Innenbehälter (3) einen im Bereich des Außenbehälterkörpers (5) angeordneten Innenbehälterkörper (6) und einen im Bereich des Außenbehälternippels (10) angeordneten, eine Ausgabeöffnung (11) aufweisenden Innenbehälterausgabeabschnitt (7) aufweist,
wobei sich der Innenbehälterausgabeabschnitt (7) in Richtung einer Spenderbehälterlängsachse (SBLA) über die gesamte Ausdehnung des Außenbehälternippels (10) erstreckt,
wobei der Innenbehälterkörper (6) aus einem blasgeformten elastischen Kunststoff und der Innenbehälterausgabeabschnitt (7) aus einem formstabilen Kunststoff gebildet sind,
wobei der Innenbehälterausgabeabschnitt (7) an seiner, dem Außenbehälternippel (10) zugewandten Oberfläche zumindest eine nutartige Vertiefung zur Bildung eines Entlüftungskanals (4) aufweist,
wobei der Entlüftungskanal eine fluide Verbindung zwischen der Umgebung und einem zwischen dem Innenbehälter (3) und dem Außenbehälter (2) befindlichen Raum (12) ausbildet,
wobei eine äußere Oberfläche des Innenbehälterkörpers (6) mit einer inneren Oberfläche des Außenbehälters (2) über zumindest 90% der Ausdehnung des Außenbehälterbodens (16) in Kontakt steht.

6. Spenderbehälter (1) nach Anspruch 5, **dadurch gekennzeichnet, dass** die äußere Oberfläche des Innenbehälterkörpers (6) mit der inneren Oberfläche des Außenbehälters (2) über zumindest 99% der Ausdehnung des Außenbehälterbodens (16) in Kontakt steht.

7. Spenderbehälter (1) nach Anspruch 5 oder 6, **dadurch gekennzeichnet, dass** die äußere Oberfläche des Innenbehälterkörpers (6) mit der inneren Oberfläche des Außenbehälters (2) über zumindest 90%, bevorzugt über zumindest 99%, der Ausdehnung des Außenbehälterkörpers (5) in Kontakt steht.

8. Spenderbehälter (1) nach einem der Ansprüche 5 bis 7, **dadurch gekennzeichnet, dass** der Außenbehälter (2) einen Außenbehälterboden (16), einen Außenbehälterkörper (5), einen Außenbehälternippel (10) und eine Außenbehälterschulter (9) aufweist, wobei die äußere Oberfläche des Innenbehälterkörpers (6) mit der inneren Oberfläche des Außenbehälters (2) über über zumindest 90%, bevorzugt über zumindest 99%, der Ausdehnung der Außenbehälterschulter (9) in Kontakt steht.

9. Spenderbehälter (1) nach einem der Ansprüche 5 bis 8, **dadurch gekennzeichnet, dass** der Innenbehälterausgabeabschnitt (7) in einem der Ausgabeöffnung (11) benachbarten Bereich einen umlaufenden Kragenabschnitt (13) aufweist, wobei der Kragenabschnitt (13) an einem, dem Außenbehälterkörper (5) abgewandten Randbereich (10.R) des Außenbehälternippels (10) bündig anliegt,
wobei der Kragenabschnitt (13) an seiner, an dem dem Außenbehälterkörper (5) abgewandten Randbereich (10.R) des Außenbehälternippels (10) bündig anliegenden Oberfläche eine um die Ausgabeöffnung (11) umlaufende nutartige Vertiefung zur Bildung einer Entlüftungsnut (8) aufweist,
wobei der Kragenabschnitt (13) an seiner, an dem dem Außenbehälterkörper (5) abgewandten Randbereich (10.R) des Außenbehälternippels (10) bündig anliegenden Oberfläche zumindest eine, sich von der Ausgabeöffnung (11) weg erstreckende nutartige Vertiefung zur Bildung einer Entlüftungsaussparung (14) aufweist, wobei die zumindest eine nutartige Vertiefung zur Bildung eines Entlüftungskanals (4) in fluider Verbindung mit der nutartigen Vertiefung zur Bildung einer Entlüftungsnut (8) steht und die nutartige Vertiefung zur Bildung der Entlüftungsnut (8) in fluider Verbindung mit der nutartigen Vertiefung zur Bildung zumindest einer Entlüftungsaussparung (14) steht,
wobei der Entlüftungskanal, die Entlüftungsnut und die Entlüftungsaussparung eine fluide Verbindung zwischen der Umgebung und einem zwischen dem Innenbehälter (3) und dem Außenbehälter (2) befindlichen Raum (12) ausbilden.

10. Spenderbehälter (1) nach Anspruch 9, **dadurch gekennzeichnet, dass** die in dem Kragenabschnitt (13) vorgesehene, um die Ausgabeöffnung (11) umlaufende nutartige Vertiefung zur Bildung einer Entlüftungsnut (8) konzentrisch zur Ausgabeöffnung (11) verläuft.

11. Spenderbehälter (1) nach Anspruch 9 oder 10, **dadurch gekennzeichnet, dass** der Innenbehälterausgabeabschnitt (7) an seiner, dem Außenbehälternippel (10) zugewandten Oberfläche mehrere nutartige Vertiefungen zur Bildung mehrerer Entlüftungskanäle (4) aufweist, wobei die nutartigen Vertiefungen zur Bildung der Entlüftungskanäle (4) bevorzugt parallel zueinander verlaufen und besonders bevorzugt parallel zur Spenderbehälterlängsachse (SBLA) verlaufen.

12. Spenderbehälter (1) nach Anspruch 11, **dadurch gekennzeichnet, dass** die nutartigen Vertiefungen zur Bildung der Entlüftungskanäle (4) gleichverteilt über den Umfang des Innenbehälterausgabeabschnitts (7) vorgesehen sind.

13. Spenderbehälter (1) nach einem der Ansprüche 9 bis 12, **dadurch gekennzeichnet, dass** der Kragenabschnitt (13) mehrere, sich von der Ausgabeöffnung (11) weg erstreckende nutartige Vertiefungen zur Bildung mehrerer Entlüftungsaussparungen (14) aufweist, wobei die nutartigen Vertiefungen zur Bildung der Entlüftungsaussparungen (14) bevorzugt gleichverteilt über den Umfang des Innenbehälterausgabeabschnitts (7) vorgesehen sind.

14. Spenderbehälter (1) nach einem der Ansprüche 5 bis 13, **dadurch gekennzeichnet, dass** der formstabile Kunststoff des Innenbehälterausgabeabschnitts (7) eine höhere Schmelztemperatur aufweist als der blasgeformte elastische Kunststoff des Innenbehälterkörpers (6).

15. Spenderbehälter (1) nach einem der Ansprüche 5 bis 14 hergestellt durch ein Verfahren gemäß den Ansprüchen 1 bis 4.

## Claims

1. Method for manufacturing a dispenser container (1) comprising the steps:
a) providing an outer container (2) formed from a dimensionally stable material, wherein the outer container (2) has an outer container base (16), an outer container body (5) and an outer container nipple (10) having an outer container opening,
b) providing a preform (20), wherein the preform (20) has a cup-like moulded body (21), wherein the moulded body (21) is constructed from at least two sections (21.6, 21.7), wherein a first section (21.6) forms a closed end of the moulded body (21) and a second section (21.7) forms an open end of the moulded body (21), wherein the closed end is opposite the open end, wherein the first section (21.6) is intended to form an inner container body (6) and the second section (21.7) is intended to form an inner container dispensing section (7) having a dispensing opening (11), wherein the first section (21.6) consists of a blow-mouldable elastic plastic, wherein the second section (21.7) consists of a dimensionally stable plastic, wherein the second section (21.7) has at least one groove-like recess on its outer surface to form a vent channel (4),
c) heating the preform (20),
d) inserting the preform (20) into the outer container (2) and inserting a stretch blow mandrel (30) into the preform (20), wherein the insertion of the stretch blow mandrel (30) into the preform (20) takes place before or after the insertion of the preform (20) into the outer container (2),
e) stretch blow moulding to form an inner container (3) while displacing the air contained in the space (12) between the preform (20) and the outer container (2), whereby the air escapes into the environment via the at least one vent channel.

2. Method for manufacturing a dispenser container (1) according to claim 1, **characterized in that** in step e) the stretch blow moulding is carried out until the outer surface of the inner container body (6) is in contact with the inner surface of the outer container (2) over at least 90%, preferably over at least 99%, of the extension of the outer container base (16).

3. Method for manufacturing a dispenser container (1) according to claim 1 or 2, **characterized in that** in step e) the stretch blow moulding is carried out until the outer surface of the inner container body (6) is in contact with the inner surface of the outer container (2) over at least 90%, preferably over at least 99%, of the extension of the outer container body (5).

4. Method for manufacturing a dispenser container (1) according to one of claims 1 to 3, **characterized in that** the outer container (2) provided in step a) has an outer container base (16), an outer container body (5), an outer container nipple (10) and an outer container shoulder (9), wherein in step e) the stretch blow moulding is carried out until the outer surface of the inner container body (6) is in contact with the inner surface of the outer container (2) over at least 90%, preferably over at least 99%, of the extension of the outer container shoulder (9).

5. Dispenser container (1) comprising an outer container (2) and an inner container (3) arranged inside the outer container (2) for receiving a filling material, wherein the outer container (2) has an outer container base (16), an outer container body (5) and an outer container nipple (10) having an outer container opening,
wherein the outer container (2) is formed from a dimensionally stable material, wherein the inner container (3) has an inner container body (6) arranged in the region of the outer container body (5) and an inner container dispensing section (7) arranged in the region of the outer container nipple (10) and having a dispensing opening (11), wherein the inner container dispensing section (7) extends in the direction of a dispenser container longitudinal axis (SBLA) over the entire length of the outer container nipple (10),
wherein the inner container body (6) is formed from a blow-moulded elastic plastic and the inner container dispensing section (7) is formed from a dimensionally stable plastic, wherein the inner container dispensing section (7) has at least one groove-like recess on its surface facing the outer container nipple (10) to form a vent channel (4),
wherein the vent channel forms a fluid connection between the environment and a space (12) located between the inner container (3) and the outer container (2), wherein an outer surface of the inner container body (6) is in contact with an inner surface of the outer container (2) over at least 90% of the extent of the outer container base (16).

6. Dispenser container (1) according to claim 5, **characterized in that** the outer surface of the inner container body (6) is in contact with the inner surface of the outer container (2) over at least 99% of the extent of the outer container base (16).

7. Dispenser container (1) according to claim 5 or 6, **characterized in that** the outer surface of the inner container body (6) is in contact with the inner surface of the outer container (2) over at least 90%, preferably over at least 99%, of the extent of the outer container body (5).

8. Dispenser container (1) according to any one of claims 5 to 7, **characterized in that** the outer container (2) has an outer container base (16), an outer container body (5), an outer container nipple (10) and an outer container shoulder (9), wherein the outer surface of the inner container body (6) is in contact with the inner surface of the outer container (2) over at least 90%, preferably over at least 99%, of the extension of the outer container shoulder (9).

9. Dispenser container (1) according to any one of claims 5 to 8, **characterized in that** the inner container dispensing section (7) has a circumferential collar section (13) in an area adjacent to the dispensing opening (11), wherein the collar section (13) is flush with an edge area (10.R) of the outer container nipple (10) facing away from the outer container body (5),
wherein the collar section (13) has a groove-like recess extending around the dispensing opening (11) to form a vent groove (8) on its surface abutting flush against the edge region (10.R) of the outer container nipple (10) facing away from the outer container body (5),
wherein the collar section (13) has, on its surface lying flush against the edge region (10.R) of the outer container nipple (10) facing away from the outer container body (5) has at least one groove-like recess extending away from the dispensing opening (11) to form a vent recess (14),
wherein the at least one groove-like recess for forming a vent channel (4) is in fluid communication with the groove-like recess for forming the vent groove (8) and the groove-like recess for forming the vent groove (8) is in fluid communication with the groove-like recess for forming at least one vent recess (14),
wherein the vent channel, the vent groove and the vent recess form a fluid connection between the environment and a space (12) located between the inner container (3) and the outer container (2).

10. Dispenser container (1) according to claim 9, **characterized in that** the groove-like recess provided in the collar section (13) surrounding the dispensing opening (11) for forming a vent groove (8) runs concentrically to the dispensing opening (11).

11. Dispenser container (1) according to claim 9 or 10, **characterized in that** the inner container dispensing section (7) has several groove-like recesses on its surface facing the outer container nipple (10) to form several venting channels (4), wherein the groove-like recesses for forming the venting channels (4) preferably run parallel to each other and particularly preferably run parallel to the dispenser container longitudinal axis (SBLA).

12. Dispenser container (1) according to claim 11, **characterized in that** the groove-like recesses for forming the vent channels (4) are provided evenly distributed over the circumference of the inner container dispensing section (7).

13. Dispenser container (1) according to any one of claims 9 to 12, **characterized in that** the collar section (13) has a plurality of groove-like recesses extending away from the dispensing opening (11) to form a plurality of vent recesses (14), wherein the groove-like recesses for forming the vent recesses (14) are preferably distributed evenly around the circumference of the inner container dispensing section (7).

14. Dispenser container (1) according to any one of claims 5 to 13, **characterized in that** the dimensionally stable plastic of the inner container dispensing section (7) has a higher melting temperature than the blow-moulded elastic plastic of the inner container body (6).

15. Dispenser container (1) according to one of claims 5 to 14, manufactured by a method according to claims 1 to 4.

## Revendications

1. Procédé de fabrication d'un récipient distributeur (1) comprenant les étapes suivantes:
a) fournir un récipient extérieur (2) formé d'un matériau indéformable, le récipient extérieur (2) comprenant un fond de récipient extérieur (16), un corps de récipient extérieur (5) et un raccord de récipient extérieur (10) comprenant une ouverture de récipient extérieur,
b) fournir une préforme (20),dans lequel la préforme (20) comprend un corps moulé (21) en forme de godet, le corps moulé (21) étant constitué d'au moins deux sections (21.6, 21.7), une première partie (21.6) formant une extrémité fermée du corps moulé (21) et une deuxième partie (21.7) formant une extrémité ouverte du corps moulé (21), l'extrémité fermée étant opposée à l'extrémité ouverte, la première partie (21.6) étant prévue pour former un corps de récipient intérieur (6) et la deuxième partie (21.7) étant prévue pour former une partie de distribution de récipient intérieur (7) qui comprend une ouverture de distribution (11), la première partie (21.6) étant constituée d'unmatièriau plastique élastique moulable par soufflage, la deuxième partie (21.7) est constituée d'un matièriau plastique indéformable, dans leuqeul la deuxième partie (21.7) comprend sur sa surface extérieure au moins un renfoncement en forme de rainure pour former un canal d'aération (4),
c) chauffer la préforme (20),
d) introduire la préforme (20) dans le récipient extérieur (2) et introduire un mandrin d'étirage-soufflage (30) dans la préforme (20), dans lequel l'introduction du mandrin d'étirage-soufflage (30) dans la préforme (20) s'effectue avant ou après l'introduction de la préforme (20) dans le récipient extérieur (2),
e) effectuer un étirage-soufflage pour former un récipient intérieur (3) en refoulant l'air contenu dans l'espace (12) situé entre la préforme (20) et le récipient extérieur (2), dans lequel l'air s'échappee dans l'environnement par le au moins un canal d'aération.

2. Procédé de fabrication d'un récipient distributeur (1) selon la revendication 1, **caractérisé en ce que**, à l'étape e), l'étirage-soufflage est effectué jusqu'à ce que la surface extérieure du corps de récipient intérieur (6) soit en contact avec la surface intérieure du récipient extérieur (2) sur au moins 90 %, de préférence sur au moins 99 %, de l'extension du fond de récipient extérieur (16).

3. Procédé de fabrication d'un récipient distributeur (1) selon la revendication 1 ou 2, **caractérisé en ce que**, à l'étape e), l'étirage-soufflage est effectué jusqu'à ce que la surface extérieure du corps de récipient intérieur (6) soit en contact avec la surface intérieure du récipient extérieur (2) sur au moins 90 %, de préférence sur au moins 99 %, de l'extension du corps de récipient extérieur (5).

4. Procédé de fabrication d'un récipient distributeur (1) selon l'une des revendications 1 à 3, **caractérisé en ce que** le récipient extérieur (2) fourni à l'étape a) comprend un fond de récipient extérieur (16), un corps de récipient extérieur (5), un raccord de récipient extérieur (10) et un épaulement de récipient extérieur (9), dans lequel à l'étape e) l'étirage-soufflage est effectué jusqu'à ce que la surface extérieure du corps de récipient intérieur (6) soit en contact avec la surface intérieure du récipient extérieur (2) sur au moins 90 %, de préférence sur au moins 99 %, de l'extension de l'épaulement de récipient extérieur (9).

5. Récipient distributeur (1) comprenant un récipient extérieur (2) et un récipient intérieur (3) disposé à l'intérieur du récipient extérieur (2) pour recevoir un produit de remplissage, dans lequel le récipient extérieur (2) comprend un fond de récipient extérieur (16), un corps de récipient extérieur (5) et un raccord de récipient extérieur (10) comprenant une ouverture de récipient extérieur,
dans lequel le récipient extérieur (2) est formé d'un matériau indéformable,
dans lequel le récipient intérieur (3) comprend un corps de récipient intérieur (6) disposé dans la zone du corps de récipient extérieur (5) et une partie de distribution de récipient intérieur (7) disposée dans la zone du raccord de récipient extérieur (10) et présentant une ouverture de distribution (11),
dans lequel la partie de distribution du récipient intérieur (7) s'étend dans la direction d'un axe longitudinal du récipient distributeur (SBLA) sur toute l'étendue du raccord de récipient extérieur (10),
dans lequel le corps du récipient intérieur (6) est formé d'un matièriau plastique élastique moulé par soufflage et la partie de distribution du récipient intérieur (7) est formée d'une matièriau plastique indéformable,
dans lequel la partie de distribution du récipient intérieur (7) comprend, sur sa surface tournée vers le raccord de récipient extérieur (10), au moins un renfoncement en forme de rainure pour former un canal d'aération (4),
dans lequel le canal d'aération forme une liaison fluidique entre l'environnement et un espace (12) situé entre le récipient intérieur (3) et le récipient extérieur (2), dans lequel une surface extérieure du corps de récipient intérieur (6) est en contact avec une surface intérieure du récipient extérieur (2) sur au moins 90 % de l'étendue du fond de récipient extérieur (16).

6. Récipient distributeur (1) selon la revendication 5, **caractérisé en ce que** la surface extérieure du corps de récipient intérieur (6) est en contact avec la surface intérieure du récipient extérieur (2) sur au moins 99 % de l'étendue du fond de récipient extérieur (16).

7. Récipient distributeur (1) selon la revendication 5 ou 6, **caractérisé en ce que** la surface extérieure du corps de récipient intérieur (6) est en contact avec la surface intérieure du récipient extérieur (2) sur au moins 90 %, de préférence sur au moins 99 %, de l'étendue du corps de récipient extérieur (5).

8. Récipient distributeur (1) selon l'une des revendications 5 à 7, **caractérisé en ce que** le récipient extérieur (2) comprend un fond de récipient extérieur (16), un corps de récipient extérieur (5), un raccord de récipient extérieur (10) et un épaulement de récipient extérieur (9), dans lequel la surface extérieure du corps de récipient intérieur (6) est en contact avec la surface intérieure du récipient extérieur (2) sur au moins 90 %, de préférence sur au moins 99 %, de l'étendue de l'épaulement de récipient extérieur (9).

9. Récipient distributeur (1) selon l'une des revendications 5 à 8, **caractérisé en ce que** la partie de distribution du récipient intérieur (7) comprend, dans une zone adjacente à l'ouverture de distribution (11), une partie de collerette périphérique (13), dans lequel la partie de collerette (13) est alignée avec une zone de bord (10.R) du raccord de récipient extérieur (10) qui est opposée au corps du récipient extérieur (5)
dans lequel la partie de collerette (13) comprend, sur sa surface reposant à fleur contre la zone de bord (10.R) du raccord de récipient extérieur (10) opposée au corps de récipient extérieur (5), un renfoncement en forme de rainure s'étendant autour de l'ouverture de distribution (11) pour former une rainure d'aération (8), dans lequel la partie de collerette (13) comprend, sur sa surface reposant à fleur contre la zone de bord (10.R) du raccord de récipient extérieur (10) opposée au corps de récipient extérieur (5) comprend au moins un renfoncement en forme de rainure s'étendant à partir de l'ouverture de distribution (11) pour former un évidement d'aération (14),
dans lequel le au moins un renfoncement en forme de rainure pour former un canal d'aération (4) est en communication fluidique avec le renfoncement en forme de rainure pour former une rainure d'aération (8) et le renfoncement en forme de rainure pour former la rainure d'aération (8) est en communication fluidique avec le renfoncement en forme de rainure pour former au moins un évidement d'aération (14),
dans lequel le canal d'aération, la rainure d'aération et l'évidement d'aération forment une communication fluidique entre l'environnement et un espace (12) situé entre le récipient intérieur (3) et le récipient extérieur (2).

10. Récipient distributeur (1) selon la revendication 9, **caractérisé en ce que** le renfoncement en forme de rainure pour former une rainure d'aération (8) qui est est prévu dans la partie de collerette (13) entourant l'ouverture de distribution (11) s'étend de manière concentrique à l'ouverture de distribution (11).

11. Récipient distributeur (1) selon la revendication 9 ou 10, **caractérisé en ce que** la partie de distribution du récipient intérieur (7) comprend, sur sa surface tournée vers le raccord de récipient extérieur (10), plusieurs renfoncements en forme de rainures pour former plusieurs canaux d'aération (4), dans lequel les renfoncements en forme de rainures pour former les canaux d'aération (4)s'étendent de préférence parallèlement les uns aux autres et, de manière particulièrement préférée, parallèlement à l'axe longitudinal (SBLA) du récipient distributeur.

12. Récipient distributeur (1) selon la revendication 11, **caractérisé en ce que** les renfoncements en forme de rainures pour former les canaux d'aération (4) sont répartis de manière uniforme sur la circonférence de la partie de distribution (7) du récipient intérieur.

13. Récipient distributeur (1) selon l'une des revendications 9 à 12, **caractérisé en ce que** la partie de collerette (13) comprend plusieurs renfoncements en forme de rainures pour former plusieurs évidements d'aération (14) s'étendant à partir de l'ouverture de distribution (11), dans lequel les renfoncements en forme de rainures pour former les évidements d'aération (14) sont de préférence répartis de manière uniforme sur la circonférence de la partie de distribution (7) du récipient intérieur.

14. Récipient distributeur (1) selon l'une des revendications 5 à 13, **caractérisé en ce que** le plastique indéformable de la partie de distribution (7) du récipient intérieur comprend une température de fusion plus élevée que le plastique élastique moulé par soufflage du corps de récipient intérieur (6).

15. Récipient distributeur (1) selon l'une des revendications 5 à 14, fabriqué selon un procédé selon les revendications 1 à 4.
